# EUROPÄISCHE PATENTSCHRIFT

(11) **EP 2 712 495 B1**
(45) Veröffentlichungstag und Bekanntmachung des Hinweises auf die Patenterteilung: **10.01.2018**
(21) Anmeldenummer: 13175839.3
(22) Anmeldetag: 10.07.2013
(51) Int. Cl.: A01D 61/00

(54) **Mitnehmervorrichtung einer Fördereinrichtung**
Drive device of a conveyor
Dispositif d'entraînement d'un dispositif de transport

(30) Priorität: 28.09.2012 DE 102012109269
(43) Veröffentlichungstag der Anmeldung: 02.04.2014
(73) Patentinhaber: CLAAS Hungaria Kft., 5200 Törökszentmiklos (HU)
(72) Erfinder: Domokos, Ferenc, 5600 Békéscsaba (HU); Szakallas, Tibor, 2750 Nagykörös (HU)
(74) Vertreter: Büscher, Christel Hedwig

(56) Entgegenhaltungen:
- EP-A1- 0 371 372
- EP-A1- 1 712 121
- US-A1- 2008 295 472
- US-A1- 2010 251 683

## Beschreibung

Die vorliegende Erfindung betrifft eine Mitnehmervorrichtung einer Fördereinrichtung gemäß dem Oberbegriff des Anspruches 1.

Mitnehmervorrichtungen von Fördereinrichtungen kommen insbesondere im Erntemaschinenbereich zum Einsatz, wo Schneckenförder der Förderung von Erntegut in axialer Richtung als auch in radialer oder tangentialer Richtung dienen. Die Mitnehmervorrichtungen der Fördereinrichtungen umfassen Mitnehmer, die durch eine exzentrische Steuerwelle in radialer Richtung der Fördereinrichtung bewegt werden, so dass diese während des Fördervorganges unterschiedlich weit aus der Fördereinrichtung herausragen. Insbesondere dann, wenn einer der Mitnehmer in seiner am weitesten aus der Fördereinrichtung herausragenden Stellung auf einen mit dem Erntegut aufgenommenen Fremdkörper trifft, kann der Mitnehmer brechen, wobei sich das größte Biegemoment im Bereich der Wandung der Fördereinrichtung ergibt. Der abgebrochene Teil des Mitnehmers fällt dann im Allgemeinen in den Erntegutstrom und wird von diesem in das Innere der Erntemaschine transportiert, wo es zu Beschädigungen von Arbeitsaggregaten der Erntemaschine, wie Dresch-, Abscheide- oder Häckseleinrichtungen eines Mähdreschers, kommen kann. Um dies zu verhindern, sind aus dem Stand der Technik Mittel bekannt, die bei einem Bruch des Mitnehmers eine Trennung der Abschnitte des Mitnehmers vermeiden sollen.

So ist aus der EP 1 712 121 A1 eine Mitnehmervorrichtung für eine Fördereinrichtung der eingangs genannten Art bekannt. Darin wird ein Mitnehmer beschrieben, der von einem Schwenklager auf einer Steuerwelle im Inneren der Fördereinrichtung angeordnet ist. Der Mitnehmer weist eine in der Nähe des Schwenklagers angeordnete Sollbruchstelle auf. Um im Falle eines Bruchs des Mitnehmers zu verhindern, dass der Außenteil des gebrochenen Mitnehmers in den Erntegutstrom fällt, wird vorgeschlagen, dass das den von dem Schwenklager beabstandeten Teil des Mitnehmers zurückhaltende Rückhaltemittel sowie das Haltemittel, mit dem der Mitnehmers am Schwenklager befestigt ist, einteilig auszuführen. Um die Einteiligkeit des Haltemittel und Rückhaltemittel zu erreichen, kommt ein aufwändig geformter Splint zum Einsatz, der einerseits der Arretierung des Mitnehmers an dem Schwenklager dient und zudem den Mitnehmer oberhalb der Sollbruchstelle umschließt. Somit führt ein Auftreffen des Mitnehmers auf einen Fremdkörper dazu, dass dieser an der Sollbruchstelle bricht, statt sich zu verformen. Von Nachteil an einem Mitnehmer gemäß der EP 1 712 121 A1 ist insbesondere die aufwändige Herstellung des Splintes sowie die für die Arretierung des Mitnehmers erforderliche besonderen Ausgestaltung des Schwenklagers zu sehen. Aufgabe der vorliegenden Erfindung ist es, eine Mitnehmervorrichtung der eingangs genannten Art derart weiterzubilden, dass dieser die Nachteile des Standes der Technik vermeidet und sich durch eine zuverlässige Rückhaltefunktion im Falle eines Bruches des Mitnehmers auszeichnet.

Diese Aufgabe wird erfindungsgemäß durch die kennzeichnenden Merkmale des Anspruches 1 gelöst.

Vorteilhafte Weiterbildungen sind Gegenstand der Unteransprüche.

Gemäß dem Anspruch 1 wird vorgeschlagen, dass der erste Befestigungsabschnitt und der zweite Befestigungsabschnitt durch federnd elastisches Verbindungselement miteinander verbunden sind und wobei das Verbindungselement als eine Schraubenzugfeder ausgebildet ist. Die durch das Verbindungselement miteinander verbundenen Abschnitte des an der Sollbruchstelle gebrochenen Mitnehmers können sich relativ zueinander freier bewegen, wobei eine sichere Verbindung des abgebrochenen Abschnittes mit dem von dem Schwenklager gehaltenen Abschnitt des Mitnehmers gegeben ist. Der abgebrochene Abschnitt des Mitnehmers wird im Allgemeinen innerhalb einer Umdrehung der Fördereinrichtung in das Innere zurückgezogen, wodurch vermieden wird, dass der abgebrochene Abschnitt des Mitnehmers mit dem Erntegutstrom Arbeitsaggregaten der Erntemaschine zugeführt wird. Die Schraubenzugfeder ist eine besonders kostengünstige und robuste Variante eines Verbindungselementes. Die Schraubenzugfeder weist endseitig Ösen auf, mit denen die Schraubenzugfeder mit dem ersten und dem zweiten Befestigungselement verbindbar ist.

Insbesondere kann der Federweg des Verbindungselementes durch ein Begrenzungselement begrenzbar sein. Durch die Begrenzung des Federweges des Verbindungselements wird sichergestellt, dass der abgebrochene Abschnitt des Mitnehmers während der Rotation der Fördereinrichtung auf Grund der Fliehkraft nur einen begrenzten Weg in radialer Richtung nach außen zurücklegen kann, um zu verhindern, dass der abgebrochene Abschnitt des Mitnehmers aus der Fördereinrichtung herausragt, was zu Beschädigungen von die Fördereinrichtung abschnittsweise umgebenden Elementen, wie die Mulde eines Schneidwerkes führen würde. Zudem kann durch das Begrenzungselement ein Überdehnen des Verbindungselementes auf Grund von Fliehkräften vermieden werden, wodurch dessen Funktion beeinträchtigt würde.

Vorzugsweise kann das Begrenzungselement eine Länge aufweisen, die zumindest der Länge des für eine Auslenkung des Verbindungselementes wirksamen Abschnittes entspricht. Als für die Auslenkung wirksamen Abschnitt ist der Teil des federnd elastischen Verbindungselementes anzusehen, der durch Krafteinwirkung eine reversible Längung beziehungsweise Auslenkung erfährt. Vorzugsweise weist das Begrenzungselement eine Länge auf, die der Länge des für eine Auslenkung des Verbindungselementes wirksamen Abschnittes entspricht zuzüglich einer Auslenkung des Verbindungselementes auf Grund der Fliehkraft, die auf den abgebrochenen Abschnitt des Mitnehmers einwirkt. Dies lässt Raum für eine Auslenkung des Verbindungselementes, wobei diese Auslenkung eine Begrenzung erfährt, um ein Herausragen des abgebrochenen Abschnittes des Mitnehmers aus der Fördereinrichtung zu verhindern. Darüber wird von dem Begrenzungselement ein entgegen der Fliehkraft gerichteter Impuls auf den abgebrochenen Abschnitt des Mitnehmers ausgeübt, durch den dieser in das Innere der Fördereinrichtung zurückgezogen wird.

Hierzu kann vorgesehen sein, dass bei einer Ausführung des Verbindungselementes als Schraubenzugfeder das Begrenzungselement die Federwindungen zumindest abschnittsweise umgibt.

Vorzugsweise kann das Begrenzungselement eine im Wesentlichen C-förmige Kontur aufweisen. Ein derart ausgeführtes Befestigungselement ist leicht an dem Verbindungselement befestigbar.

Alternativ kann das Begrenzungselement eine im Wesentlichen ovale, ringförmige Kontur aufweisen. Ein derartiges Begrenzungselement zeichnet sich durch eine größere Stabilität sowie sichere Befestigung an dem Verbindungselement aus.

In einer weiteren Ausführungsform kann das Begrenzungselement als ein Zugband ausgeführt sein.

Bevorzugt kann der erste Befestigungsabschnitt als eine koaxial zum Mitnehmer angeordnete ringförmige Scheibe ausgeführt sein. Der Scheibe kommt die Aufgabe zu, der Befestigung des Spannelementes zu dienen und zu verhindern, dass der abgebrochene Abschnitt des Mitnehmers durch eine Führung auf der Mantelfläche der Fördereinrichtung hindurch nach außen gelangen kann.

Die vorliegende Erfindung wird anhand eines in den Zeichnungen dargestellten Ausführungsbeispieles näher erläutert.

Es zeigen:
- Fig. 1: eine schematisierte Querschnittansicht durch ein Schneidwerk eines Mähdreschers mit an einer Steuerwelle gelagerten Mitnehmern;
- Fig. 2: eine Teilansicht einer Fördereinrichtung von vorne;
- Fig. 3: eine perspektivische Ansicht einer Mitnehmervorrichtung für eine Fördereinrichtung gemäß Fig. 2;
- Fig. 4: eine perspektivische Ansicht einer zweiten Ausführungsform einer Mitnehmervorrichtung für eine Fördereinrichtung gemäß Fig. 2.

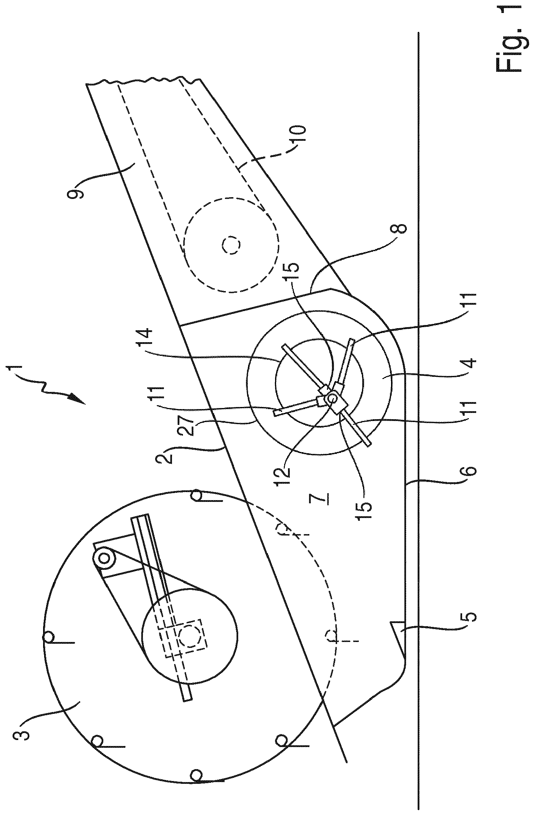

Die vorliegende Erfindung wird am Beispiel der Anwendung an einem Schneidwerk 1 eines Mähdreschers beschrieben. Die schematisierte Darstellung in Fig. 1 zeigt eine Querschnittansicht eines Schneidwerk 1. Das Schneidwerk 1 umfasst im Wesentlichen einen Tragrahmen 2, eine Haspel 3, eine als Einzugsschnecke ausgeführte Fördereinrichtung 4 und ein Mähmesser 5. Der Tragrahmen 2 besteht aus einer Bodenwand 6, den beiden gegenüberliegenden Seitenwänden 7 sowie aus einer Rückwand 8. Das Erntegut wird von der Haspel 3 erfasst und zum Mähmesser 5 geleitet und von diesem abgeschnitten. Das abgeschnittene Gut wird von der Fördereinrichtung 4 von beiden Seiten aus durch Schneckenwendeln 27 in Richtung der Mitte des Schneidwerkes 1 gefördert und von dort an einen Einzugskanal 9 übergeben, dessen Schrägförderer 10 das Gut zu einer Drescheinrichtung des Mähdreschers weiterfördert.

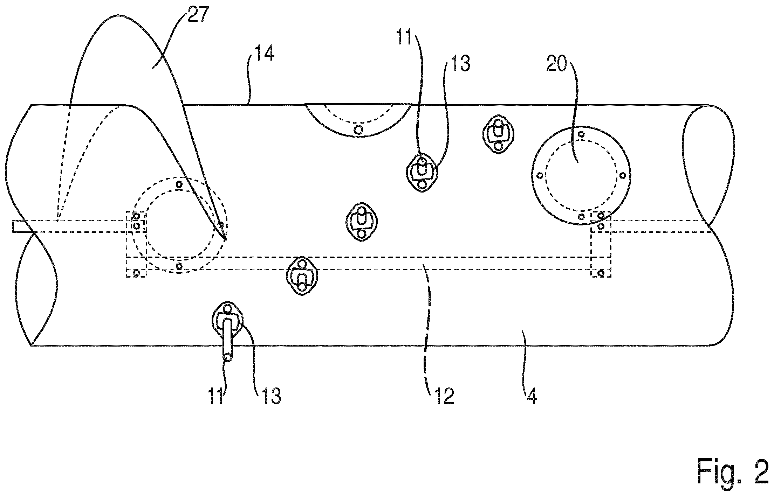

Die Übergabe des Erntegutes von der Fördereinrichtung 4 zum Einzugskanal 9 wird durch die im mittleren Bereich der Fördereinrichtung 4 angeordneten gesteuerten Mitnehmer 11 unterstützt. Die Mitnehmer 11 sind auf einer exzentrisch im Innenraum der Einzugsschnecke 4 angeordneten Steuerwelle 12 gelagert. Im Mantel 14 der Fördereinrichtung 4 sind Führungen 13 angeordnet, durch die die freien Enden der Mitnehmer 11 hindurch bewegt werden und in das Erntegut eingreifen und dieses in Richtung zum Einzugskanal 9 fördern, wie in Fig. 2 dargestellt. Die einzelnen Mitnehmer 11 sind an einem Schwenklager 15 angeordnet, welches die Steuerwelle 12 umschließt.

Die Darstellung in Fig. 2 zeigt eine Teilansicht der als Einzugsschnecke ausgebildeten Fördereinrichtung 4 von vorne. Der von den Schneckenwendeln 27 eingefasste Mittenbereich der Fördereinrichtung 4, in dem die Mitnehmer 11 angeordnet sind, weist durch Deckel 20 verschlossene Montageöffnungen auf, durch die die Mitnehmer 11 sowie die Schwenklager 15 im Inneren der Fördereinrichtung 4 zugänglich sind.

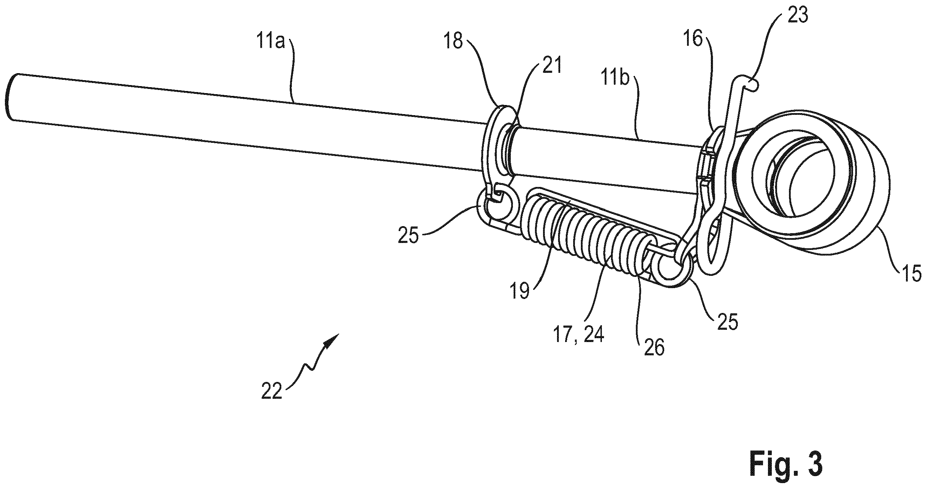

In Fig. 3 ist eine perspektivische Ansicht einer Mitnehmervorrichtung 22 für eine Fördereinrichtung 4 gemäß Fig. 2 dargestellt. Die Mitnehmervorrichtung 22 umfasst einen Mitnehmer 11, der mit einem Ende in dem Schwenklager 15 auf der Steuerwelle 12 gelagert ist. Die Fixierung des Mitnehmers 11 erfolgt durch einen Splint 23, der das Schwenklager 15 sowie den Mitnehmer 11 durchdringt. Benachbart zu dem Schwenklager 15 ist ein erster Befestigungsabschnitt 16 angeordnet. In Richtung des freien Endes des Mitnehmers 11 befindet sich eine Sollbruchstelle 21, die dazu dient, dass bei Überschreiten eines Schwellwertes für eine auf den Mitnehmer 11 ausgeübte Kraft, dieser in zwei Mitnehmerteile 11a und 11b zerbricht, um zu verhindern, dass der Mitnehmer 11 auf Grund der äußeren, auf diesen aufgebrachten Kraft verbiegt. Das Verbiegen des Mitnehmers 11 hätte zur Folge, dass die Fördereinrichtung 4 blockiert, da der Mitnehmer 11 durch die exzentrische Steuerwelle 12 nicht mehr in das Innere zurückgezogen werden kann. Der sofortige Austausch des Mitnehmers 11 würde notwendig, was zu einer Unterbrechung des Ernteprozesses führt. Weiterhin ist auf der dem freien Ende des Mitnehmers 11 zugewandten Seite ein zweiter Befestigungsabschnitt 18 angeordnet, der sich aus Sicht des ersten Befestigungselementes 16 hinter der Sollbruchstelle 21 befindet. An dem ersten Befestigungsabschnitten 16 und dem zweiten Befestigungsabschnitt 18 ist ein federnd elastisches Verbindungselement 17 angeordnet, welches sich in Längsrichtung des Mitnehmers 11 zwischen dem ersten Befestigungsabschnitten 16 und dem zweiten Befestigungsabschnitt 18 erstreckt. Das federnd elastische Verbindungselement 17 wird bei einem Auseinanderbrechen des Mitnehmers 11 an der Sollbruchstelle 21 auf Grund der Fliehkräfte auf Zug belastet.

Das Verbindungselement 17 ist vorzugsweise als eine Schraubenzugfeder 24 mit mehreren Windungen 26 ausgeführt, deren endseitig angeordneten Ösen 25 der Befestigung an den Befestigungsabschnitten 16 und 18 dienen. Der Federweg beziehungsweise die Auslenkung des federnd elastischen Verbindungselementes 17 ist durch ein Begrenzungselement 19 begrenzbar. Das Begrenzungselement 19 erstreckt sich im Wesentlichen parallel zu der Belastungsrichtung des Verbindungselementes 17. Dabei kann das Begrenzungselement 19 das Verbindungselement 17 zumindest abschnittsweise umschließen. Im vorliegenden Ausführungsbeispiel weist das Begrenzungselement 19 eine im Wesentlichen ovale, ringförmige Kontur auf. Dabei erstreckt es sich durch das Innere der Schraubenfeder 24 und umschließt die Federwindungen 26 der Schraubenzugfeder 24 auf der Innen- und Außenseite.

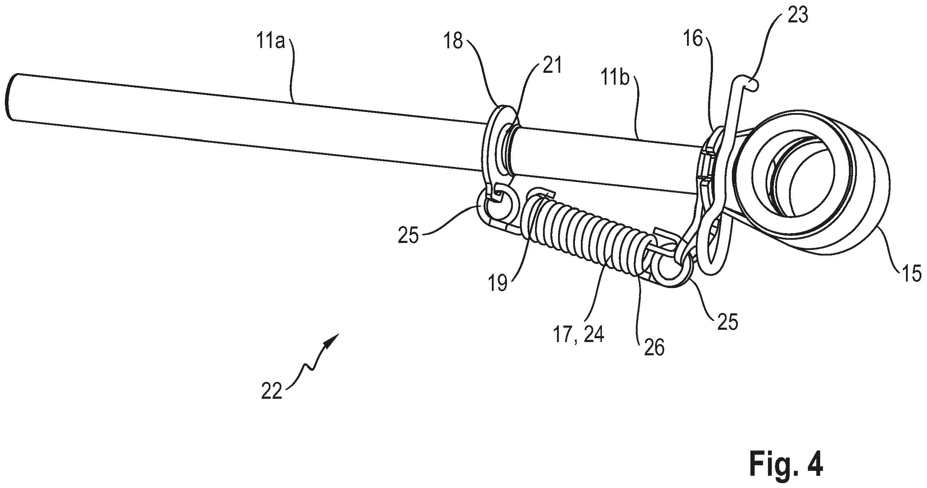

Denkbar ist aber auch, dass ein Begrenzungselement 19 die Federwindungen 26 nur abschnittsweise umschließt, beispielsweise bei einer im Wesentlichen C-förmigen Ausbildung eines Begrenzungselementes 19, wie dies in Fig. 4 dargestellt ist. Das C-förmig ausgebildete Begrenzungselement 19 erstreckt sich durch das Innere der Schraubenfeder 24 und umgreift endseitig die Federwindungen 26 der Schraubenfeder 24 nur abschnittsweise. Hierbei ist eine geeignete Dimensionierung des Begrenzungselementes 19 vorzusehen, damit dieses die Zugkräfte aufnehmen kann, die zu einer Überdehnung des Verbindungselementes 17 führen können.

Die Länge des Begrenzungselementes 19 überschreitet die für den wirksamen Federweg des Verbindungselementes 17 maßgeblichen Bereich. Im Fall der Schraubenzugfeder 24 erstreckt sich das Begrenzungselementes 19 zumindest über die Länge des Abschnittes mit Federwindungen 26 hinaus. Die Begrenzung des Federweges des Verbindungselementes 17 durch das Begrenzungselement 19 dient dazu, im Fall eines Bruches des Mitnehmers 11 zu verhindern, dass der abgebrochende Mitnehmerteil 11a auf Grund der Fliehkraft in radialer Richtung nach außen bewegt wird und mit seinem zweiten Befestigungsabschnitt 18 an der Innenseite des Mantels 14 gehalten wird. Zudem kann eine Überdehnung des Verbindungselementes 17 in Folge eines Verhakens des abgebrochenen Mitnehmerteiles 11a im Inneren der Fördereinrichtung 4 werden .

Während des Betriebes der Fördereinrichtung 4 befinden sich die auf der exzentrisch im Innenraum der Fördereinrichtung 4 angeordneten Steuerwelle 12 gelagerten Mitnehmer 11 in radialer Richtung in unterschiedlichen Positionen. Auf der dem zu fördernden Erntegut zugewandten Seite der Fördereinrichtung 4 ragen die Mitnehmer 11 weiter über die Führungen 13 hinaus, als auf der dem Erntegut abgewandten Seite. Führt nun beispielsweise ein Fremdkörper im Erntegutstrom dazu, dass einer der Mitnehmer 11 an seiner Sollbruchstelle 21 bricht, wird der abgebrochene Mitnehmerteil 11a auf Grund der Fliehkraft radialer Richtung nach außen beschleunigt. Ein Austreten durch die Führung 13 wird durch das als ringförmige Scheibe ausgeführte zweite Befestigungselement 18 verhindert. Während des Einziehens des am Schwenklager 15 angeordneten Mitnehmerteiles 11b in das Innere der Fördereinrichtung 4 durch die Rotation der Fördereinrichtung 4 wird der abgebrochene Mitnehmerteil 11b von dem Spannelement 19 gehalten beziehungsweise in das Innere der Fördereinrichtung 4 zurückgezogen.

Bei einer alternativen Ausführung des Verbindungselementes als ein Zugband kann dieses parallel zu dem Verbindungselement geführt sein. Für die Ausführungsform des Verbindungselementes 17 als könnte sich das Zugband zwischen den endseitigen Ösen 25 erstrecken und mit diesen verbunden sein, wobei das Zugband eine Länge aufweist, die größer ist, als die Länge des für eine Auslenkung des Verbindungselementes wirksamen Abschnittes.

### Bezugszeichenliste

- **1**: Schneidwerk
- **2**: Tragrahmen
- **3**: Haspel
- **4**: Fördereinrichtung
- **5**: Mähmesser
- **6**: Bodenwand
- **7**: Seitenwände
- **8**: Rückwand
- **9**: Einzugskanal
- **10**: Schrägförderer
- **11**: Mitnehmer
- **12**: Steuerwelle
- **13**: Führung
- **14**: Mantel
- **15**: Schwenklager
- **16**: Erster Befestigungsabschnitt
- **17**: Verbindungselement
- **18**: Zweiter Befestigungsabschnitt
- **19**: Begrenzungselement
- **20**: Deckel
- **21**: Sollbruchstelle
- **22**: Mitnahmevorrichtung
- **23**: Splint
- **24**: Schraubenzugfeder
- **25**: Öse
- **26**: Federwindung
- **27**: Schneckenwendeln

## Patentansprüche

1. Mitnehmervorrichtung (22) einer Fördervorrichtung (4), insbesondere einer Einzugsfingerbaugruppe eines Schneckenförderers einer Erntevorrichtung, umfassend einen im Inneren der Fördereinrichtung (4) angeordneten Mitnehmer (11), ein Schwenklager (15) zur Lagerung des Mitnehmers (11) auf einer Steuerwelle (12), einem dem Schwenklager (15) zugeordneten ersten Befestigungsabschnitt (16) sowie einem zu dem ersten Befestigungsabschnitt (16) beabstandeten zweiten Befestigungsabschnitt (18), zwischen denen eine Sollbruchstelle (21) am Mitnehmer (11) angeordnet ist,
wobei der erste Befestigungsabschnitt (16) und der zweite Befestigungsabschnitt (18) durch ein federnd elastisches Verbindungselement (17) miteinander verbunden sind, **dadurch gekennzeichnet, dass** das Verbindungselement (17) als eine Schraubenzugfeder (24) ausgebildet ist.

2. Mitnehmervorrichtung (22) nach Anspruch 1, **dadurch gekennzeichnet, dass** der Federweg des Verbindungselementes (17, 24) durch ein Begrenzungselement (19) begrenzbar ist.

3. Mitnehmervorrichtung (22) nach Anspruch 2, **dadurch gekennzeichnet, dass** das Begrenzungselement (19) eine Länge aufweist, die zumindest der Länge des für eine Auslenkung des Verbindungselementes (17, 24) wirksamen Abschnittes entspricht.

4. Mitnehmervorrichtung (22) nach einem der Ansprüche 2 oder 3, **dadurch gekennzeichnet, dass** das Begrenzungselement (19) sich im Wesentlichen parallel zu dem Verbindungselement (17, 24) erstreckt.

5. Mitnehmervorrichtung (22) nach einem der Ansprüche 1 bis 4, **dadurch gekennzeichnet, dass** das Begrenzungselement (19) die Federwindungen (26) der Schraubenzugfeder (24) zumindest abschnittsweise umschließt.

6. Mitnehmervorrichtung (22) nach einem der Ansprüche 1 bis 5, **dadurch gekennzeichnet, dass** das Begrenzungselement (19) eine im Wesentlichen C-förmige Kontur aufweist.

7. Mitnehmervorrichtung (22) nach einem der Ansprüche 1 bis 5, **dadurch gekennzeichnet, dass** das Begrenzungselement eine im Wesentlichen ovale, ringförmige Kontur aufweist.

8. Mitnehmervorrichtung (22) nach einem der Ansprüche 1 bis 6, **dadurch gekennzeichnet, dass** der zweite Befestigungsabschnitt (18) als eine koaxial zum Mitnehmer (11) angeordnete ringförmige Scheibe ausgeführt ist.

## Claims

1. An entrainment device (22) of a conveyor apparatus (3), in particular an intake finger assembly of a worm conveyor of a harvester, including an entrainment member (11) arranged in the interior of the conveyor apparatus (4), a pivot bearing (15) for supporting the entrainment member (11) on a control shaft (12), a first fixing portion (16) associated with the pivot bearing (15) and a second fixing portion (18) associated with the first fixing portion (16), between which is disposed a predetermined breaking location (21) on the entrainment member (11), wherein the first fixing portion (16) and the second fixing portion (18) are connected together by a resiliently elastic connecting element (17), **characterised in that** the connecting element (17) is in the form of a coil tension spring (24).

2. An entrainment device (22) according to claim 1 **characterised in that** the spring travel of the connecting element (17, 24) can be limited by a limiting element (19).

3. An entrainment device (22) according to claim 2 **characterised in that** the limiting element (19) is of a length which corresponds at least to the length of the portion operative for a deflection of the connecting element (17, 24).

4. An entrainment device (22) according to one of claims 2 and 3 **characterised in that** the limiting element (19) extends substantially parallel to the connecting element (17, 24).

5. An entrainment device (22) according to one of claims 1 to 4 **characterised in that** the limiting element (19) at least portion-wise encloses the spring turns (26) of the coil tension spring (24).

6. An entrainment device (22) according to one of claims 1 to 5 **characterised in that** the limiting element (19) is of a substantially C-shaped contour.

7. An entrainment device (22) according to one of claims 1 to 5 **characterised in that** the limiting element is of a substantially oval, annular contour.

8. An entrainment device (22) according to one of claims 1 to 6 **characterised in that** the second fixing portion (18) is in the form of an annular disc arranged coaxially with the entrainment member (11).

## Revendications

1. Dispositif entraîneur (22) d'un dispositif de convoyage (4), en particulier d'un ensemble de doigts d'alimentation d'un convoyeur à vis d'un dispositif de récolte, comprenant un entraîneur (11) disposé à l'intérieur du dispositif de convoyage (4), un palier pivotant (15) pour supporter l'entraîneur (11) sur un arbre de commande (12), une première portion de fixation (16) associée au palier pivotant (15) ainsi qu'une seconde portion de fixation (18) distante de la première portion de fixation (16), entre lesquelles un point de rupture privilégié (21) est ménagé sur l'entraîneur (11), la première portion de fixation (16) et la seconde portion de fixation (18) étant reliées entre elles par l'intermédiaire d'un élément de liaison à effet ressort (17), **caractérisé en ce que** l'élément de liaison (17) est conformé en ressort de traction hélicoïdal (24).

2. Dispositif entraîneur (22) selon la revendication 1, **caractérisé en ce que** la course élastique de l'élément de liaison (17, 24) peut être limitée par l'intermédiaire d'un élément de limitation (19).

3. Dispositif entraîneur (22) selon la revendication 2, **caractérisé en ce que** l'élément de limitation (19) présente une longueur qui correspond au moins à la longueur de la portion active pour une excursion de l'élément de liaison (17, 24).

4. Dispositif entraîneur (22) selon une des revendications 2 ou 3, **caractérisé en ce que** l'élément de limitation (19) s'étend sensiblement parallèlement à l'élément de liaison (17, 24).

5. Dispositif entraîneur (22) selon une des revendications 1 à 4, **caractérisé en ce que** l'élément de limitation (19) entoure au moins par endroits les spires de ressort (26) du ressort de traction hélicoïdal (24).

6. Dispositif entraîneur (22) selon une des revendications 1 à 5, **caractérisé en ce que** l'élément de limitation (19) présente un contour sensiblement en forme de C.

7. Dispositif entraîneur (22) selon une des revendications 1 à 5, **caractérisé en ce que** l'élément de limitation présente un contour sensiblement ovale annulaire.

8. Dispositif entraîneur (22) selon une des revendications 1 à 6, **caractérisé en ce que** la seconde portion de fixation (18) est conformée en rondelle annulaire disposée coaxialement à l'entraîneur (11).
